# EUROPEAN PATENT APPLICATION

(11) **EP 3 918 926 A1**
(43) Date of publication of application: **08.12.2021**
(21) Application number: 20748997.2
(22) Date of filing: 23.01.2020
(51) Int. Cl.: A23L 23/00, A23L 27/00, A23L 27/60, A23L 29/244, A23L 29/256

(54) **HEATED INGREDIENT-CONTAINING LIQUID SEASONING PACKAGED IN AIRTIGHT CONTAINER, METHOD FOR MANUFACTURING SAME, AND METHOD FOR IMPROVING PHYSICAL PROPERTIES**

(30) Priority: 30.01.2019 JP 2019014312
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: TAKASE, Ryosuke, Handa-shi, Aichi 475-8585 (JP); KAKEDA, Miho, Handa-shi, Aichi 475-8585 (JP); MASUDA, Toshiyuki, Handa-shi, Aichi 475-8585 (JP)
(74) Representative: Mewburn Ellis LLP
(86) International application number: PCT/JP2020/002288
(87) International publication number: WO 2020/158563

(57) **Abstract**

To provide a heat-treated ingredient-containing liquid seasoning of ingredients and a liquid seasoning in a solid-liquid simultaneous filling type sealed container, which can be produced with a simple operation and general raw materials by using an ordinary device without requiring any special device, any complicated treatment condition, and any special raw material and without impairing the flavor and properties of the ingredients and liquid seasoning, a method for producing the same, and a method for improving properties of the same. The heat-treated ingredient-containing liquid seasoning of the ingredients and the liquid seasoning in the solid-liquid simultaneous filling type sealed container contains acetic acid and a water-soluble polysaccharide-containing food material and is heat treated.

## Description

### TECHNICAL FIELD

The present disclosure relates to a heat-treated ingredient-containing liquid seasoning in a sealed container, a method for producing the same, and a method for improving properties of the same.

### BACKGROUND ART

When liquid seasoning containing ingredients are filled into a container, there is a method for weighing and filling separately the ingredients and the liquid seasoning.

However, in a method for separately filling the ingredients and the liquid seasoning, there has been a problem that two or more systems of filling nozzles and incidental facilities are required, and complicated operations such as operations during the use and cleaning after the use are required.

To solve the problem, a device has been developed, which mixes ingredients and a liquid seasoning with a strong stirring force, and instantaneously and simultaneously fills the obtained mixture (solid-liquid) into a container with a single filling operation (referred to as solid-liquid simultaneous filling) while uniformly dispersing the ingredients in the liquid seasoning.

However, in a case where the ingredients and the liquid seasoning are filled by the solid-liquid simultaneous filling with such a device, there has been a problem that the ingredients are broken or collapsed, the shape is impaired and softened due to the strong stirring force. In addition, the ingredients and the liquid seasoning are separated when the stirring force is weakened. Accordingly, a special device is required and the distance between the stirring container and the filling container has to be short, which limits a location for installing such a device.

To solve the above problems, Patent Literature 1 discloses a method for filling a solid part and an oil part into a package as one liquid form or liquid mixture. In the method, the solid part in a paste form and the oil part are mixed and filled under the temperature ranging between 50°C and 80°C. Both parts can be made uniform while preventing the separation between the parts and filled in a package as the one liquid form (liquid mixture). Patent Literature 2 discloses a method for filling a seasoning liquid in a packaging container. In the method, sesame grains are contained in the seasoning liquid containing a dispersant, and the sesame grains are mixed under stirring to disperse them in the whole seasoning liquid. Then, edible fats and oils are contained in the resultant seasoning liquid and mixed under stirring to disperse them in the whole seasoning liquid. The mixing under stirring is continued and then the obtained mixture is filled in the packaging container in a state that the sesame grains and the edible fats and oils are together dispersed in the whole seasoning liquid. Patent Literature 3 discloses a method in which a mixture containing 10 to 20% (w/w) of a sesame paste, 1.5 to 3.0% (w/w) of a processed starch, and 10 to 50% (w/w) of a vegetable fat and oil with respect to the whole seasoning is prepared at a temperature less than 75°C, the obtained mixture is filled into a container in one-liquid form (liquid mixture), the container is sealed, and then the sealed container is heated at 75 to 90°C.

However, in the method of Patent Literature 1, the solid part is required to be in a paste form, and the versatility has been inferior as a means for producing the ingredient-containing liquid seasoning having various embodiments.

The method disclosed in Patent Literature 2 relates to an edible fat-and-oil separation-type sesame grain-containing liquid seasoning in the packaging container, in which the dispersant is contained to the extent that the sesame grains, the edible fats and oils, and the like are temporarily dispersed, and has not been a technique that can be universally applied in an ingredient-containing liquid seasoning that does not contain sesame and/or edible fats and oils. Specifically, it discloses that "the dispersant of the present invention may be any dispersant as long as the dispersant is used in an ordinary liquid seasoning, examples of the dispersant include gums such as xanthan gum, carrageenan, guar gum, tamarind seed gum, and locust bean gum, pectin, gelatin, agar, polydextrose, celluloses, processed starches (including modified starches), pullulan, curdlan, and egg yolk, and one or two or more kinds of them are used" (paragraph 0012). As described above, the degree of the dispersion effect is weak only to perform temporary dispersion. Further, the method has required complicated stepwise operations (steps), including allowing sesame grains to be contained, mixing the sesame grains under stirring to disperse them uniformly in the whole seasoning liquid, allowing edible fats and oils to be contained, mixing the edible fats and oils under stirring to disperse them uniformly in the whole seasoning liquid, and filling the edible fat-and-oil separation-type sesame grain-containing liquid seasoning into the packaging container while performing the mixing under stirring so that the sesame grains and the edible fats and oils are maintained in a dispersed state. In addition, as disclosed in Patent Literature 3, there has been a problem that "in a case where the production is performed by filling a mixture of a water layer part and an oil layer part into a container at one time while stirring the mixture so as not to separate between the parts, since vigorous stirring continues for a long time, there is a drawback that flavor of a compounding raw material such as edible fat and oil or sesame paste deteriorates" (paragraph 0003).

Patent Literature 3 discloses that as the method for overcoming the flavor degradation, a container-packed sesame-containing separation-type seasoning can be produced while maintaining the sesame flavor richly, by adjusting the mixing amounts of an oil layer part, a water layer part, a sesame paste, and a processed starch. However, Patent Literature 3 discloses that the edible fat and oil, and processed starch are essential, and similarly to the above, the method has not been a technique that can be universally applied in an ingredient-containing liquid seasoning in which various kinds of ingredients are mixed in a case of containing no edible fat and oil.

With regard to a heat-treated ingredient-containing liquid seasoning containing no edible fat and oil, the inventors of this disclosure have attempted to prepare an ingredient-containing liquid seasoning that can be filled by solid-liquid simultaneous filling by using a dispersant and a processed starch, by referring to the above-disclosed technique. Specifically, it has been investigated that by using a filling device connected to a relatively long pipe (specifically, about 5 cm in inner diameter, and about 10 m in length) to a blending tank with an existing stirrer, which has no special function, ingredients such as vegetable pieces are uniformly dispersed in a liquid seasoning containing no edible fat and oil, so that the ingredients and the liquid seasoning can be transported at the same time. However, it has been found that a new problem arises at that time.

Specifically, it has been found that the viscosity of the thickener as a dispersant is required to be relatively high in a case of mixing the ingredients, the liquid seasoning, and a thickener with a weak stirring force so that the flavor and properties of the ingredients do not deteriorate, without using any special device, uniformly dispersing the ingredients in the liquid seasoning, and allowing the obtained mixture to be filled into a container by solid-liquid simultaneous filling, and also problems in eating and preference occur in the properties of the final product in a case that the viscosity is increased.

To specifically describe the problems in eating and preference, in the ingredient-containing liquid seasoning such as stew sauce, a property that is thick but sticky with clear aftertaste is desired during eating, but the viscosity derived from the thickener that has mixed for solid-liquid simultaneous filling gives the ingredient-containing liquid seasoning a property that is sticky with a poor aftertaste, and as a result, the thickness exists, but the stickiness with poor aftertaste is generated and the palatability and preference become poor. In addition, in an ingredient-containing ponzu vinegar or the like that does not require thickness, the characteristic viscosity derived from the thickener is particularly strongly developed in the liquid seasoning, and it is not possible to adjust to the desired properties.

Regarding these problems, Patent Literature 4 discloses a technique for decreasing the viscosity of the thickener by adding a highly branched cyclic dextrin and/or a starch degradation product of DE 1 to 15 in the thickening liquid composition including the thickener. Further, Patent Literature 5 discloses a technique for hydrolyzing polysaccharides to monosaccharides or oligosaccharides by hydrothermal reaction in a hot water containing a weakly acidic organic acid at 120 to 300°C under a pressure of 0.2 to 100 MPa.

However, Patent Literature 4 discloses that, in the method thereof, the highly branched cyclic dextrin and/or the starch degradation product of DE 1 to 15, which have an effect of decreasing the viscosity of the thickener, exert an effect of decreasing the viscosity of the thickener regardless of the concentration as long as the concentration is a specific threshold concentration or more, but the effect of decreasing the viscosity is not exerted if the concentration is less than the specific threshold concentration. Accordingly, depending on the use mode (for example, dilution operation) of the liquid seasoning, the effect component fluctuates at a concentration between before and after the threshold value, and the effect of decreasing the viscosity becomes unstable. Therefore, in the liquid seasoning having various use modes, there has been a problem that it becomes necessary to add an excessive amount of the effect component to ensure the stability of the effect of decreasing the viscosity. In addition, there has been a problem that the effect component is special and high in cost.

Patent Literature 5 discloses that, in the method thereof, "'polysaccharides" refer to a high molecular compound that generates monosaccharides by hydrolysis, and are specifically, starch, agar, guar gum, cellulose, glucomannan, and xylan' (paragraph 0018), and a variety of water-soluble polysaccharides having a thickening property are included in the subject. However, according to the present method, the decomposition power is extremely strong, and it is impossible to improve only a part of the viscosity of the liquid seasoning, and in the ingredient-containing liquid seasoning in the sealed container by solid-liquid simultaneous filling, there has been a problem that not only the preferable viscosity itself desired for the liquid seasoning but also the texture of the ingredients are lost, and therefore it has not been easily applied to the liquid seasoning.

### CITATION LIST

### Patent Literature

Patent Literature 1: JP 2016-182071A
Patent Literature 2: JP 2002-369665A
Patent Literature 3: JP 2015-139408A
Patent Literature 4: WO 2017/002722
Patent Literature 5: JP 2009-195189A

### SUMMARY

### Technical Problem

An object of the present disclosure is to provide a heat-treated ingredient-containing liquid seasoning of ingredients and a liquid seasoning in a solid-liquid simultaneous filling type sealed container, which has an improved property of the viscosity derived from a water-soluble polysaccharide and damaging the palatability and preference, and can be produced with a simple operation and general raw materials by using an ordinary device without requiring any special device, any complicated treatment condition, and any special raw material and without impairing the flavor and properties of the ingredients and the liquid seasoning; a method for producing the same; and a method for improving properties of the same.

### Solution to Problem

As a result of intensive study, in view of the above circumstances, the inventors of the present disclosure have focused on the adjustment effect of the combination and the mixing amounts of food raw materials, which has not been found in conventional techniques and have newly found that the above problems can be easily solved. Subsequently, the inventors have conducted intensive studies based on the above findings, and thus have completed the following disclosure.

That is, the present disclosure is to provide the following (1) to (11).
(1) An ingredient-containing liquid seasoning of ingredients and a liquid seasoning in a solid-liquid simultaneous filling type sealed container, including acetic acid, and a water-soluble polysaccharide-containing food material, wherein the ingredient-containing liquid seasoning is heat treated.
(2) The ingredient-containing liquid seasoning according to (1), wherein a length of a longest line of the ingredients before heat treatment ranges between equal to or more than 1.0 mm and equal to or less than 80 mm, and wherein a mass increase rate of the ingredients between before the heat treatment and after the heat treatment ranges between equal to or more than 0.5 times and equal to or less than 10 times.
(3) The ingredient-containing liquid seasoning according to (1) or (2), wherein a content of the acetic acid is equal to or more than 0.05% by mass with respect to a total amount of the ingredient-containing liquid seasoning.
(4) The ingredient-containing liquid seasoning according to any one of (1) to (3), wherein a mixing amount of a water-soluble polysaccharide derived from the water-soluble polysaccharide-containing food material before heat treatment ranges between equal to or more than 0.01% by mass and equal to or less than 0.45% by mass with respect to a total amount of the ingredient-containing liquid seasoning.
(5) The ingredient-containing liquid seasoning according to any one of (1) to (4), wherein the water-soluble polysaccharide-containing food material is one or more selected from *konnyakuimo* powder, kelp extract, and *nagaimo* powder.
(6) The ingredient-containing liquid seasoning according to any one of (1) to (5), wherein a heat treatment temperature ranges between equal to or more than 70°C and equal to or less than 100°C, and wherein a heat treatment time ranges between equal to or more than 5 minutes and equal to or less than 60 minutes.
(7) The ingredient-containing liquid seasoning according to any one of (1) to (6), including raw starch as a raw material, wherein a viscosity (at 20°C by a B-type viscometer) in a final product is equal to or more than 500 mPa·s.
(8) The ingredient-containing liquid seasoning according to any one of (1) to (7), including a food material having an emulsifying action and edible fat and oil as raw materials, wherein a liquid property in a final product is an oil-water separation type.
(9) A method for producing an ingredient-containing liquid seasoning of ingredients and a liquid seasoning in a solid-liquid simultaneous filling type sealed container, including: mixing ingredients, acetic acid, and a water-soluble polysaccharide-containing food material; simultaneously filling a mixture obtained by the mixing into a container; performing heat treatment after or before sealing the container; and cooling an ingredient-containing liquid seasoning in the sealed container obtained by performing heat treatment to an approximately ambient temperature.
(10) A method for improving properties of an ingredient-containing liquid seasoning of ingredients and a liquid seasoning in a solid-liquid simultaneous filling type sealed container, including: mixing ingredients, acetic acid, and a water-soluble polysaccharide-containing food material; simultaneously filling an obtained mixture into a container; performing heat treatment after or before sealing the container; and cooling an obtained ingredient-containing liquid seasoning in the sealed container to an approximately ambient temperature.
(11) The method according to (10), wherein a uniform filling property of the ingredients and the liquid seasoning for each container improves, and viscosity derived from the water-soluble polysaccharide in the liquid seasoning is specifically eliminated.

### Advantageous Effects

According to the present disclosure, the heat-treated ingredient-containing liquid seasoning of the ingredients and the liquid seasoning in the solid-liquid simultaneous filling type sealed container, which has an improved property of the viscosity derived from the water-soluble polysaccharide and damaging the palatability and preference, and can be produced with a simple operation and general raw materials by using an ordinary device without requiring any special device, any complicated treatment condition, and any special raw material and without impairing the flavor and properties of the ingredients and liquid seasoning; a method for producing the heat-treated ingredient-containing liquid seasoning; and a method for improving properties of the heat-treated ingredient-containing liquid seasoning, can be provided.

### DESCRIPTION OF EMBODIMENTS

A first embodiment of the present disclosure relates to an ingredient-containing liquid seasoning of ingredients and a liquid seasoning in a solid-liquid simultaneous filling type sealed container. The liquid seasoning includes acetic acid and a water-soluble polysaccharide-containing food material. The liquid seasoning is heat-treated.

The solid-liquid simultaneous filling in the present embodiment refers to a filling process or procedure in which the ingredients are uniformly dispersed in the liquid seasoning, and the dispersed mixture (solid-liquid) is simultaneously filled into the container with one filling pipe to complete the filling. That is, in the present embodiment, ingredients are uniformly dispersed in the liquid seasoning, transported together with the liquid seasoning, and filled into the container.

The ingredients are not limited at all as long as they are food materials in a solid state other than the state of being completely dissolved in the liquid seasoning at the time of filling into the container. However, considering the uniform dispersibility in the liquid seasoning and the transportability of the liquid seasoning, the size of the ingredients may be usually equal to or less than 80 mm, preferably equal to or less than 60 mm, more preferably equal to or less than 50 mm, and further more preferably equal to or less than 40 mm, as the upper limit of the length of the longest line of the ingredients before heat treatment. On the other hand, as the lower limit of the length of the longest line of the ingredients before heat treatment, the size of ingredients may be preferably equal to or more than 1.0 mm, in particular more preferably equal to or more than 1.5 mm, and further more preferably equal to or more than 2.0 mm from the viewpoint of the significance of mixing (appearance and texture) as the ingredients.

Further, from the viewpoint of the uniform dispersibility of the ingredients in the liquid seasoning and the transportability of the liquid seasoning, the upper limit of the mass increase rate of the ingredients between before the heat treatment and after the heat treatment due to the water absorption, dehydration, or the like may be usually equal to or less than 10 times, preferably equal to or less than 9 times, and more preferably equal to or less than 8 times. On the other hand, the lower limit may be usually equal to or more than 0.5 times, and is preferably equal to or more than 0.7 times from the viewpoint of the significance of mixing (appearance and texture) as the ingredients. The mass increase rate of the ingredients between before the heat treatment and after the heat treatment is a ratio of the mass of the ingredients after the heat treatment to the mass of the ingredients before the heat treatment.

The liquid seasoning is not limited at all as long as it is generally called the liquid seasoning, and examples of the liquid seasoning include stew sauce, curry sauce, pasta sauce, Chinese sauce, and soup sauce. The liquid seasoning may have a liquid property within the range that an effect of the present disclosure (improvement of uniform dispersibility of ingredients and transportability of ingredients) is exerted at the time of the filling.

In addition, the mixing ratio of the liquid seasoning in the ingredient-containing liquid seasoning may be appropriately adjusted enough to maintain the final product in a liquid state in consideration of the above mass increase rate of the ingredients. The mixing ratio of the ingredients may also be appropriately adjusted similarly.

The sealed container in the present embodiment refers to a container that can be closed by sealing the lid or the packaging container immediately after filling the ingredients and the liquid seasoning. In the subsequent treatment, the container in need of heat treatment may be a container having heat resistance to the temperature, and the size, the shape, the type of material, and the like may be appropriately selected according to the intended purpose.

As the acetic acid in the present embodiment, a food material containing the acetic acid may be used. Specifically, as an example of the acetic acid, vinegar being an acetic acid fermentation product or the like can be included.

From the viewpoint of the exertion of an effect of the present disclosure, the lower limit of the content of the acetic acid in the ingredient-containing liquid seasoning may be equal to or more than 0.05% by mass, preferably equal to or more than 0.075% by mass, and more preferably equal to or more than 0.1% by mass. On the other hand, the upper limit of the content of the acetic acid is not particularly limited in a case where the acid taste and acid smell are desired in the liquid seasoning, but in a case where the acid taste and acid smell are not desired, the upper limit of the content of the acetic acid may be usually equal to or less than 1.0% by mass, preferably equal to or less than 0.75% by mass, and more preferably equal to or less than 0.5% by mass from the viewpoint of the influence on the flavor of the liquid seasoning.

The water-soluble polysaccharide-containing food material in the present embodiment is not particularly limited and may be any food material that does not contain a thickener which is a food additive but naturally contains the water-soluble polysaccharide. Examples of the water-soluble polysaccharide-containing food material include, as plants, tubers, and roots such as *konnyaku imo* or konjac bulb (Amorphophallus konjac), *yamaimo* or Japanese yam (Dioscorea japonica) (*jinenjyo, jinenjyou, yamanoimo*), *nagaimo* or Chinese yams (D. opposita (D. polystachya) (*yamato imo, tsukuneimo*), *yamuimo* or true yam, *kikuimo* or Jerusalem artichoke, *taroimo* or taro (*satoimo* or Colocasia esculenta, *ebi-imo, egu-imo, Karanoimo, Takenokoimo, Taimo),* and lotus root; vegetables such as okra or gumbo, mulukhiya, Basella alba, Angelica keiskei, *kinjisou* or Gynura bicolor, Watershield, *Okawakame* or *oka* seaweed, aloe vera, and cactus; mushrooms such as *nameko;* kelps (particularly, *tororo konbu* or Saccharina gyrata, *kagome konbu* or Saccharina sculpera, and the like); *wakame* seaweeds (particularly, *Mekabu,* and the like); algae such as *mozuku* or Nemacystus decipiens, Sargassum horneri, Ecklonia kurome, Gelidium amansii, and Gracilaria; processed beans such as *natto* or fermented soybeans; and fruits or nuts and seeds of jackfruit, mistletoe, and cactus. As animal food products, examples of the water-soluble polysaccharide-containing food material include milk processed products such as Caspian Sea yogurt and other viscous fermented milk. Further, a powder, an extract, and a purified product of the above ones may also be used. Among them, from the viewpoint of the easiness of drying, plants are preferable, and further, tubers and roots, and algae are preferable in view of the smallness of impurity components, and particularly, a kelp extract, a *konnyakuimo* or konjac bulb powder, and a *nagaimo* or Chinese yam powder (in particular, *Yamatoimo* powder) are preferable. However, among them, a *konnyakuimo* powder is particularly preferable from the viewpoint of the exertion of an effect of the present disclosure and from the viewpoint of not affecting the flavor of the liquid seasoning. Only one of the above water-soluble polysaccharide-containing food materials may be used, or two or more of the above water-soluble polysaccharide-containing food materials may be used in combination thereof. In addition, the above "*Yamatoimo*" is one kind of *nagaimo* or Chinese yams (D. opposita (D. polystachya)) and is sometimes also referred to as *Tsukuneimo.*

The mixing amount of the water-soluble polysaccharide-containing food material with respect to the ingredient-containing liquid seasoning before the heat treatment may be equal to or more than 0.02% by mass, more preferably equal to or more than 0.025% by mass, and further preferably equal to or more than 0.05% by mass as the lower limit from the viewpoints of sufficiently uniformly dispersing the ingredients in the liquid seasoning and further of being capable of transporting over a relatively long distance (by using, for example, pipe of inner diameter of 5 cm and length of 10 m). On the other hand, as the upper limit, the mixing amount of the water-soluble polysaccharide-containing food material may be equal to or less than 0.9% by mass, more preferably equal to or less than 0.75% by mass, and further preferably equal to or less than 0.5% by mass from the viewpoint of the influence on the viscosity imparted to the liquid seasoning.

The mixing amount of the water-soluble polysaccharide with respect to the ingredient-containing liquid seasoning before the heat treatment may be equal to or more than 0.01% by mass, more preferably equal to or more than 0.0125% by mass, and further preferably equal to or more than 0.025% by mass as the lower limit from the viewpoint similar to the above. On the other hand, as the upper limit, the mixing amount thereof may be equal to or less than 0.45% by mass, more preferably equal to or less than 0.375% by mass, and further preferably equal to or less than 0.25% by mass from the viewpoint similar to the above.

In particular, in a case where a *konnyakuimo* powder is used as the water-soluble polysaccharide-containing food material, the mixing amount of glucomannan, which is the water-soluble polysaccharide, with respect to the whole amount of the ingredient-containing liquid seasoning may be equal to or more than 0.01% by mass, more preferably equal to or more than 0.0125% by mass, and further preferably equal to or more than 0.025% by mass as the lower limit. On the other hand, as the upper limit, the mixing amount may be equal to or less than 0.45% by mass, more preferably equal to or less 0.375% by mass, and further preferably equal to or less 0.25% by mass from the viewpoint similar to the above.

In the present embodiment, as the raw material to be used for the liquid seasoning, except for the ingredients and the water-soluble polysaccharide-containing food material, a basic seasoning such as sugar, salt, vinegar, *miso* (fermented soybean paste), or soy sauce, a food additive such as an emulsifier, a thickener, a colorant, a flavor, or a preservative, edible fat and oil, juice, and further a food raw material to be generally used for producing a food product, may be appropriately selected depending on the desired flavor and properties and used within the range that an effect of the present disclosure (uniform dispersibility of ingredients and transportability of ingredients) is not inhibited.

In the present embodiment, raw starch may further be contained as the raw material of the liquid seasoning. In this case, after the filling in the sealed container, the preferable thick viscosity that cannot be obtained with the addition of the thickener can be imparted by performing the heat treatment at a temperature equal to or higher than the gelatinization temperature of the mixed raw starch. The origin of the raw material for the raw starch and the kind of non-glutinous or glutinous are not limited at all, and a material and a kind that can impart the desired thick property may be appropriately selected.

From the viewpoint of imparting the strong and preferable thickness to the ingredient-containing liquid seasoning, the mixing amount of the raw starch at this time may be appropriately adjusted so that the viscosity measured by a B-type viscometer (20°C) in the liquid seasoning of the final product is equal to or more than 500 mPa·s. However, the viscosity is not limited to the above in the ingredient-containing liquid seasoning in which the raw starch is not used.

The viscosity of the liquid seasoning may be measured by a method using the B-type viscometer (for example, "B-II" manufactured by Toki Sangyo Co., Ltd). Specifically, an adequate amount of the liquid seasoning is filled into the container for measurement of the B-type viscometer, the temperature is adjusted to 20°C, and then the container is arranged to the B-type viscometer, and the viscosity is measured at an adequate revolution by using a rotor suitable for the measurement of viscosity. Specifically, in a case where "B-II" manufactured by Toki Sangyo Co., Ltd is used, the viscosity is measured at a revolution of 30 rpm by using No.3 or No.4 of the rotor.

Further, in the present embodiment, an emulsifier (for example, lecithin) as a food additive, and food (for example, egg yolk, *miso,* or the like) having an emulsifying action may be mixed with the liquid seasoning as the food materials having an emulsifying action, and further edible fat and oil may be mixed. In this case, in the mixing and filling of the raw materials and the subsequent heat treatment step, the edible fat and oil and the water layer are emulsified and mixed, flavor components derived from the ingredients and the raw materials are extracted into the edible fat and oil part, and the oil layer part can be flavored. In addition, by further allowing the heat treatment to proceed, the food material having the emulsifying action is destroyed (emulsifying action is eliminated), and with the subsequent cooling to an approximately ambient temperature and still standing, the ingredient-containing liquid seasoning can be made into the ingredient-containing liquid seasoning of an oil-water separation type in which the oil layer part is also sufficiently flavored (flavor-oiled). If such a seasoning of the oil-water separation type is desired, a food material that is easily destroyed by heat treatment (for example, *miso* or the like) may be selected as the food material having the emulsifying action. If the maintenance of the emulsified state is desired, a food material that has a heat-resistant emulsifying action may be appropriately selected (for example, soybean lecithin).

The present embodiment also includes the ingredient-containing liquid seasoning in the sealed container which contains the food material having the emulsifying action and the edible fat and oil as the raw materials and has the liquid property of the oil-water separation type in the final product. Further, the present embodiment includes the ingredient-containing liquid seasoning in the sealed container which contains the food material having the emulsifying action and the edible fat and oil as the raw materials and has the liquid property of the emulsion type in the final product.

In the present embodiment, the heat treatment in the presence of the acetic acid is performed to cause partial hydrolysis of the water-soluble polysaccharide, and substantially eliminate the characteristic viscosity to be imparted to the liquid seasoning by the water-soluble polysaccharide. Accordingly, the heat treatment temperature after the filling of the ingredient-containing liquid seasoning in the sealed container is not limited at all as long as the ingredient-containing liquid seasoning exerts the above effect and further does not affect the preferable flavor and properties. For example, if the ingredient-containing liquid seasoning and the packaging container which can be retorted are used, the heat treatment temperature can be set to a range between equal to or more than 70°C and equal to or less than 130°C. However, if the ingredient-containing liquid seasoning and the packaging container which cannot be retorted are used, it is preferable to set the heat treatment temperature to a range between equal to or more than 70°C and less than 100°C. The time for the heat treatment may be appropriately adjusted depending on the temperature conditions. For example, the time for heat treatment may be set to a range between equal to or more than 15 minutes and equal to or less than 60 minutes in a case where the heat treatment is performed at the range between equal to or more than 70°C and less than 100°C. The time for the heat treatment may be set to a range between equal to or more than 5 minutes and equal to or less than 20 minutes in a case where the heat treatment is performed at a range between equal to or more than 100°C and equal to or less than 130°C. In addition, in the present embodiment, pasteurization at the heat treatment temperature between equal to or more than 70°C and less than 100°C is preferable, and the heat treatment time between equal to or more than 15 minutes and equal to or less than 60 minutes is preferable from the viewpoints that the bacteriostatic action is expected because of containing the acetic acid and the flavor and properties may be deteriorated due to heat load on the ingredients and the liquid seasoning.

The heat treatment may be performed before or after the solid-liquid simultaneous filling and may be appropriately selected in accordance with the desired liquid properties before and after the heat treatment. Further, in a case where the heat treatment is performed after the filling, the container may be sealed before or after the heat treatment.

In addition, the ingredient-containing liquid seasoning in the sealed container in the present embodiment contains the water-soluble polysaccharide-containing food material, and the ingredients and the liquid seasoning can be simultaneously filled into the container, but the water-soluble polysaccharide imparts the property of viscosity that damages the palatability and preference to the liquid seasoning as described above. However, it is considered that a characteristic and unfavorable property of viscosity derived from the water-soluble polysaccharide can be specifically eliminated by a partial slow hydrolytic action of the water-soluble polysaccharide caused by the heat treatment in the presence of the acetic acid mixed at the same time. Thereby, the ingredient-containing liquid seasoning of the ingredients and the liquid seasoning in a solid-liquid simultaneous filling type sealed container, which has an improved property of viscosity derived from the water-soluble polysaccharide and damaging the palatability and preference, and can be produced with a simple operation and general raw materials by using an ordinary device without requiring any special device, any complicated treatment condition, and any special raw material and without impairing the flavor and properties of the ingredients and the liquid seasoning, can be provided. Also, the method for producing the ingredient-containing liquid seasoning and the method for improving the properties of the ingredient-containing liquid seasoning can be provided.

In the present embodiment, even in the above aspect in which the raw starch is contained as the raw material and the heat treatment is performed to generate preferable thickness, a characteristic and unfavorable property of viscosity derived from the water-soluble polysaccharide, which is felt partially in viscosity in a case where the acetic acid is not mixed, can be specifically eliminated without affecting the property of the preferable thickness, and the preferable thickness can be imparted to the liquid seasoning.

A second embodiment of the present disclosure relates to a method for producing an ingredient-containing liquid seasoning of ingredients and a liquid seasoning in a solid-liquid simultaneous filling type sealed container, including mixing ingredients, acetic acid, and a water-soluble polysaccharide-containing food material, simultaneously filling the mixture into the container, performing heat treatment after or before sealing the container, and cooling the sealed container to an approximately ambient temperature. The details are as described above. That is, this method of the present embodiment includes a mixing step, a simultaneous filling step (solid-liquid simultaneous filling step), a heat treatment step, and a cooling step.

In the mixing step, the ingredients, the acetic acid, and the water-soluble polysaccharide-containing food material are mixed to prepare a mixture of the ingredients and the liquid seasoning. In this way, the ingredients are uniformly dispersed in the liquid seasoning, transported together with the liquid seasoning, and can be filled into the container by the solid-liquid simultaneous filling. The ingredients, the acetic acid, and the water-soluble polysaccharide-containing food material, which are raw materials, are as described above. Further, the mixing amounts of these materials may be appropriately adjusted so that the content in the final product as described above is obtained. The means for mixing the above raw materials is not particularly limited, and a blender or the like having a general mixing and stirring function may be used.

In the simultaneous filling step, the mixture obtained in the above mixing step is simultaneously filled into a container (i.e., by the solid-liquid simultaneous filling). The solid-liquid simultaneous filling refers to a filling process or procedure in which the ingredients are uniformly dispersed in the liquid seasoning, and the mixture (solid-liquid) is simultaneously filled into the container at one time with a single filling pipe to complete the filling. That is, in this step, the ingredients are uniformly dispersed in the liquid seasoning, transported together with the liquid seasoning, and filled into the container. As the device used for the solid-liquid simultaneous filling, a conventionally-known device may be used. However, in the present embodiment, a filling device including a general mixing and stirring tank and a filling pipe (having 1 cm to 10 cm in inner diameter and 2 m to 20 m in length) connected to the mixing and stirring tank may also be used without using any conventional special device since the uniform filling property of the ingredients and the liquid seasoning is improved by containing the water-soluble polysaccharide-containing food material. The container is as described above.

In the heat treatment step, the heat treatment is performed on the container filled in the above simultaneous filling step after or before sealing the container. Alternatively, the heat treatment may also be performed before the solid-liquid simultaneous filling depending on the liquid properties of the ingredient-containing liquid seasoning before and after the heat treatment. In this step, the water-soluble polysaccharide is specifically partially hydrolyzed by performing the heat treatment in the presence of the acetic acid, and thus the viscosity derived from the water-soluble polysaccharide is substantially eliminated, and the preferable properties and flavor can be maintained as they are. The heat treatment conditions are as described above. Further, the means for sealing the container is not particularly limited, and a conventionally-known method may be used.

In the cooling step, the ingredient-containing liquid seasoning in the sealed container obtained in the above heat treatment step is cooled to an approximately ambient temperature. In this step, the cooling means is not particularly limited, and examples of the cooling means include a method for cooling the sealed container by leaving it to stand under a room temperature, and a method for cooling the sealed container by immersing it in water at a temperature equal to or lower than the ambient temperature. It should be noted that the expression "approximately ambient temperature" refers to a temperature between equal to or more than 15°C and equal to or more than 35°C.

Further, the third embodiment of the present disclosure relates to a method for improving properties of an ingredient-containing liquid seasoning in an ingredient-containing liquid seasoning in a sealed container, characterized by mixing the ingredients, the acetic acid, and the water-soluble polysaccharide-containing food material, simultaneously filling the obtained mixture into the container, performing heat treatment on the mixture filled in the container after or before sealing the container, and cooling the obtained ingredient-containing liquid seasoning in the sealed container to an approximately ambient temperature. The details are as described above.

In this embodiment, the expression "improving properties" refers that the uniform filling property of the ingredients and the liquid seasoning for each of the containers improves, and further that the viscosity derived from the water-soluble polysaccharide in the liquid seasoning is specifically eliminated. The term "specifically" means that only the viscosity derived from the water-soluble polysaccharide is substantially eliminated, but the preferable properties and flavor of the liquid seasoning are maintained. The principle of the above "improving properties" is as described above.

### EXAMPLES

### First Experimental Example: Investigation of Size of Ingredients

Brewed vinegar containing the acetic acid, and a *konnyakuimo* powder as a representative of the water-soluble polysaccharide-containing food material were selected. Here, by combining the ingredients with different sizes shown in Tables 1 and 2, the influence of the size of the ingredients on the dispersion uniformity in a blending tank, the uniform filling property into a container, and the appearance of the ingredients were investigated.

The mixing amounts of the ingredients and the liquid seasoning are as shown in Tables 1 and 2. These were put into the blending tank with warm water of 60°C, and mixed (and then, water was adjusted until the amount became a certain level). After that, the dispersion uniformity of the ingredients in the liquid seasoning in the blending tank was confirmed by visual observation and evaluated. Further, the prepared ingredient-containing liquid seasoning was filled into 20 transparent plastic containers each having a volume of 150 mL through a filling pipe having 5 cm in inner diameter and 10 m in length. Then, the uniform filling property of the ingredients and the liquid seasoning, and the appearance of the ingredients were confirmed by visual observation, and evaluated for each of the containers.

Each evaluation was performed by visual observation by five skilled development engineers, scored in accordance with the following evaluation criteria, and shown as the average value (rounded off to the nearest integer) of the scores.

(Evaluation Item 1) Dispersion uniformity of ingredients and liquid seasoning in the blending tank
5: Excellent since the ingredients and the liquid seasoning are uniformly dispersed.
4: Somewhat excellent since the ingredients and the liquid seasoning are almost uniformly dispersed.
3: Acceptable since there is a slightly non-uniform part in the dispersion of the ingredients and the liquid seasoning.
2: Somewhat inferior since there is somewhat a non-uniform part in the dispersion of the ingredients and the liquid seasoning.
1: Inferior since the dispersion of the ingredients and the liquid seasoning are apparently non-uniform.

(Evaluation Item 2) Uniform filling property of ingredients and liquid seasoning after being filled into container
5: Excellent since the ingredients and the liquid seasoning are uniformly filled in each of the containers.
4: Somewhat excellent since the ingredients and the liquid seasoning are almost uniformly filled in each of the containers.
3: Acceptable since there are slight differences in the uniformity of the ingredients and the liquid seasoning among the containers.
2: Somewhat inferior since there are somewhat differences in the uniformity of the ingredients and the liquid seasoning among the containers.
1: Inferior since there are apparent differences in the uniformity of the ingredients and the liquid seasoning among the containers.

(Evaluation Item 3) Appearance of ingredients after being filled into container
5: Excellent since the ingredient-containing liquid seasoning has a favorable appearance.
4: Somewhat excellent since the ingredient-containing liquid seasoning has somewhat a favorable appearance.
3: Acceptable since the ingredient-containing liquid seasoning has a slightly inferior appearance. 2: Somewhat inferior since the ingredient-containing liquid seasoning has a somewhat inferior appearance.
1: Inferior since the ingredient-containing liquid seasoning has an apparently inferior appearance.

(Evaluation Item 4) Overall evaluation (dispersion uniformity and uniform filling property of ingredients and liquid seasoning and appearance in mass production)
5: Excellent since there is no problem in mass production of the ingredient-containing liquid seasoning.
4: Somewhat excellent since there is almost no problem in mass production of the ingredient-containing liquid seasoning.
3: Acceptable since there is a slight problem in mass production of the ingredient-containing liquid seasoning.
2: Somewhat inferior since there is somewhat a problem in mass production of the ingredient-containing liquid seasoning.
1: Inferior since there is apparently a problem in mass production of the ingredient-containing liquid seasoning.

The results are shown in Tables 1 and 2.

**Table 1**

| Raw materials | | Blending amount (% by mass) | Shape | Test Example 1 | Test Example 2 | Test Example 3 | Test Example 4 | Test Example 5 | Test Example 6 |
|---|---|---|---|---|---|---|---|---|---|
| | | | | Length of longest line of ingredients (mm) | | | | | |
| Ingredients | Dried onion | 5 | Long piece | 1 | 1.5 | 2 | 5 | 10 | 20 |
| | Dried lentil | 5 | Granular | 4 | 4 | 4 | 4 | 4 | 4 |
| Liquid seasoning | Sugar | 10 | | | | | | | |
| | Brewed vinegar (acetic acid contents of 15% by mass) | 3 | | | | | | | |
| | Tomato paste | 15 | | | | | | | |
| | Konnyakuimo powder | 0.15 | | | | | | | |
| | Water | Residue | | | | | | | |
| Evaluation | Dispersion uniformity (within blending tank) | | | 5 | 5 | 5 | 5 | 5 | 5 |
| | Uniform filling (after filling into container) | | | 5 | 5 | 5 | 5 | 5 | 5 |
| | Appearance of ingredients (after filled into container) | | | 3 | 4 | 5 | 5 | 5 | 5 |
| | Overall evaluation | | | 4 | 5 | 5 | 5 | 5 | 5 |

**Table 2**

| Raw materials | | Blending amount (% by mass) | Shape | Test Example 7 | Test Example 8 | Test Example 9 | Test Example 10 | Test Comparative Example 11 Example 1 | |
|---|---|---|---|---|---|---|---|---|---|
| | | | | Length of longest line of ingredients (mm) | | | | | |
| Ingredients | Dried onion | 5 | Long piece | 30 | 40 | 50 | 60 | 80 | 100 |
| | Dried lentil | 5 | Granular | 4 | 4 | 4 | 4 | 4 | 4 |
| Liquid seasoning | Sugar | 10 | | | | | | | |
| | Brewed vinegar (acetic acid contents of 15% by mass) | 3 | | | | | | | |
| | Tomato paste | 15 | | | | | | | |
| | Konnyakuimo powder | 0.15 | | | | | | | |
| | Water | Residue | | | | | | | |
| Evaluation | Dispersion uniformity (within blending tank) | | | 5 | 5 | 5 | 4 | 4 | 3 |
| | Uniform filling (after filling into container) | | | 5 | 5 | 4 | 4 | 3 | 2 |
| | Appearance of ingredients (after filled into container) | | | 5 | 5 | 5 | 5 | 5 | 5 |
| | Overall evaluation | | | 5 | 5 | 5 | 4 | 3 | 2 |

As a result, it was found that there was a tendency that the smaller the sizes of the ingredients, the lower the score of the appearance of the ingredients, but there was no big problem on the whole. Conversely, it was found that in a case where the smaller-size ingredients and the larger-size ingredients were mixed, there was a tendency that the scores of the dispersion uniformity of the ingredients in the liquid seasoning and the uniform filling property into the container were lowered.

Specifically, it was found that as for the size of the ingredients, the lower limit of the length of the longest line may be equal to or more than 1.0 mm, preferably be equal to or more than 1.5 mm, and more preferably equal to or more than 2.0 mm in view of the appearance of the ingredients. In addition, it was found that the upper limit may be equal to or less than 80 mm, and from the viewpoints of the dispersion uniformity and the uniform filling property into the container, the upper limit is preferably equal to or less than 60 mm, more preferably equal to or less than 50 mm, and further preferably equal to or less than 40 mm. The longest line refers to the longest distance in a three-dimensional structure of the ingredient (for example, a length of the diagonal line in a case of a cubic shape).

(First Example) The first example relates to the investigation of the influence of the mass increase rate of the ingredients between before and after the heat treatment on the production of the ingredient-containing liquid seasoning. The ingredients absorb water or are dehydrated, swelled, or shrunk by the mixture into the liquid seasoning and the heat treatment, and the size and mass are changed. The influence of these changes on the production of the ingredient-containing liquid seasoning was investigated. The ingredient-containing liquid seasonings were prepared similarly as in the first experimental example by using the ingredients having different mass increase rates shown in Table 3. Further, after sealing the container, the sealed container was subjected to heat treatment at 70°C for 30 minutes and left to stand at an ambient temperature to cool the sealed container down to an approximately ambient temperature (15 to 35°C). The evaluation was performed similarly as in the first experimental example.

The mass increase rate of the ingredients between before and after heat treatment is a ratio of the mass of the ingredients after heat treatment to the mass of the ingredients before heat treatment. Specifically, the mass of each ingredient before the heat treatment was measured in advance, the mass of each ingredient after the heat treatment performed under the conditions similar to the above conditions was measured again, and the mass after the heat treatment was divided by the mass before the heat treatment to determine the mass increase rate.

**Table 3**

| Ingredients | Mass increase rate between before and after heat treatment | Shape | Length of longest line of i ngred i ents (mm) |
|---|---|---|---|
| Dried onion | 5.5 times | Long piece | 40 |
| Dried lentil | Twice | Granular | 4 |
| Flaked soy protein | 8 times | Square | 10 |
| Konnyaku strips | 0.7 times | Square | 15 |

The results are shown in Table 4.

**Table 4**

| Raw materials | | Test Example 12 | Test Example 13 | Test Example 14 | Test Example 15 |
|---|---|---|---|---|---|
| | | Blending amount (% by mass) | | | |
| Ingredients | Dried onion | 5 | | - | |
| | Dried lentil | - | 5 | - | - |
| | Flaked soy protein | - | - | 5 | - |
| | Konnyaku strips | - | - | - | 5 |
| Liquid seasoning | Sugar | 10 | | | |
| | Brewed vinegar (acetic acid contents of 15% by mass) | 1.5 | | | |
| | Tomato paste | 15 | | | |
| | Konnyakuimo powder | 0.15 | | | |
| | Water | Residue | | | |
| Evaluation | Dispersion uniformity (within blending tank) | 4 | 5 | 5 | 5 |
| | Uniform filling (after filling into container) | 4 | 5 | 5 | 5 |
| | Appearance of ingredients (after filled into container) | 5 | 5 | 5 | 5 |
| | Overall evaluation | 4 | 5 | 5 | 5 |

As a result, in a case where the ingredient-containing liquid seasoning was prepared by using the ingredients having different mass increase rates, no problematic phenomena were generated.

Specifically, the mass increase rate of the ingredients between before and after the heat treatment may be equal to or more than 0.5 times, and it is considered that no problem arises at all as long as the mass increase rate is equal to or less than 10 times.

(Second Example) The second example relates to the investigation of a range of the acetic acid content in the ingredient-containing liquid seasoning. In this example, by using brewed vinegar containing the acetic acid, the ingredient-containing liquid seasonings having different acetic acid contents as shown in Table 5 were prepared. The preparation was performed similarly as in the first example.

Next, a sensory evaluation test was conducted on the ingredient-containing liquid seasoning after the heat treatment for the viscosity derived from the water-soluble polysaccharide, and the uncomfortable feeling of flavor. The test results were scored in accordance with the following evaluation criteria, and shown as the average value (rounded off to the nearest integer). In addition, the opinions of the sensory inspectors were summarized and described. The details are described later.

(Evaluation Item 5) Viscosity derived from water-soluble polysaccharide
5: Excellent since viscosity derived from the water-soluble polysaccharide is not felt at all.
4: Somewhat excellent since viscosity derived from the water-soluble polysaccharide is almost not felt.
3: Acceptable since viscosity derived from the water-soluble polysaccharide is slightly felt.
2: Somewhat inferior since viscosity derived from the water-soluble polysaccharide is somewhat felt.
1: Inferior since viscosity derived from the water-soluble polysaccharide is felt.

(Evaluation Item 6) Uncomfortable feeling of flavor
5: Excellent since the uncomfortable feeling of flavor due to the acid taste and acid smell derived from the acetic acid is not found.
4: Somewhat excellent since the uncomfortable feeling of flavor due to the acid taste and acid smell derived from the acetic acid is almost not found.
3: Acceptable since the uncomfortable feeling of flavor due to the acid taste and acid smell derived from the acetic acid is slightly found.
2: Somewhat inferior since the uncomfortable feeling of flavor due to the acid taste and acid smell derived from the acetic acid is somewhat found.
1: Inferior since the uncomfortable feeling of flavor due to the acid taste and acid smell derived from the acetic acid is found.

(Evaluation Item 7) Overall evaluation of properties and flavor
5: Properties and flavor as the ingredient-containing liquid seasoning are excellent.
4: Properties and flavor as the ingredient-containing liquid seasoning are somewhat excellent.
3: Properties and flavor as the ingredient-containing liquid seasoning are slightly inferior but acceptable.
2: Properties and flavor as the ingredient-containing liquid seasoning are somewhat inferior.
1: Properties and flavor as the ingredient-containing liquid seasoning are inferior.

The discriminative training of the following A) to C) was conducted on candidates for inspectors. The inspectors who have particularly excellent results, have experience in product development, have abundant knowledge about the quality including food taste and texture, and can conduct an absolute evaluation for each sensory test item were selected as the sensory inspectors.

A) Taste discrimination test that accurately discriminates the tastes of a total of seven samples that are prepared from aqueous solutions each having a concentration close to the threshold value of each component and two sets of distilled water, for five flavors (sweet: taste of sugar, sour: taste of tartaric acid, *umami*: taste of sodium glutamate, salty: taste of sodium chloride, and bitter: taste of caffeine).
B) Concentration difference discrimination test that accurately discriminates the concentration differences among five types of aqueous salt solutions and acetic acid aqueous solutions with slightly different concentrations.
C) Three-point discrimination test that accurately discriminates soy sauce of manufacturer B from a total of three samples consisting of two soy sauces of manufacturer A and one soy sauce of the manufacturer B.

In addition, also in any of the evaluation items, all of the inspectors evaluated the standard sample in advance and standardized each score of the evaluation criteria, and then 10 inspectors conducted the objective sensory test. Each of the evaluation items was evaluated by a system in which each inspector selects one number closest to the own evaluation from the scores on a 5-point scale of each item. The scores of the evaluation results were calculated from the arithmetic average value of the scores of 10 inspectors.

The results are shown in Table 5.

**Table 5**

| Raw materials | | Comparative Example 2 | Test Example 16 | Test Example 17 | Test Example 18 | Test Example 19 | Test Example 20 | Test Example 21 | Test Example 22 | Test Example 23 |
|---|---|---|---|---|---|---|---|---|---|---|
| | | Blending amount (% by mass) | | | | | | | | |
| Ingredients | Dried onion | 5 | | | | | | | | |
| | Dried lentil | 5 | | | | | | | | |
| Liquid seasoning | Sugar | 10 | | | | | | | | |
| | Brewed vinegar (acetic acid contents of 15% by mass) | 0.167 (acetic acid 0.025% by mass) | 0.333 (acetic acid 0.050% by mass) | 0.500 (acetic acid 0.075% by mass) | 0.667 (acetic acid 0.10% by mass) | 1.33 (acetic acid 0.20% by mass) | 3.33 (acetic acid 0.50% by mass) | 5.00 (acetic acid 0.75% by mass) | 6.67 (acetic acid 1.00% by mass) | 8.33 (acetic acid 1.25% by mass) |
| | Tomato paste | 15 | | | | | | | | |
| | Konnyakuimo powder | 0.15 | | | | | | | | |
| | Water | Residue | | | | | | | | |
| Evaluation | Viscosity after heat treatment | 2 | 3 | 4 | 5 | 5 | 5 | 5 | 5 | 5 |
| | Uncomfortable feeling of flavor | 5 | 5 | 5 | 5 | 5 | 5 | 4 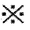 | 3 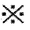 | 2 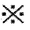 |
| | Overall evaluation (property and flavor) | 2 | 3 | 4 | 5 | 5 | 5 | 4 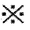 | 3 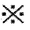 | 2 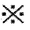 |
| | Remarks | - | - | - | - | - | - | Applicable in case that acid taste and acid smell are desired (evaluation "5") | | |

As a result, in a case where the content of the acetic is 0.025% by mass, the viscosity derived from the water-soluble polysaccharide was felt, and the evaluation was comprehensively inferior. On the other hand, in a case where the content of the acetic acid is equal to or more than 0.05% by mass, viscosity derived from the water-soluble polysaccharide, and the uncomfortable feeling of flavor derived from the acetic acid were not found, and the evaluation was comprehensively excellent. However, in a case where the content of the acetic acid is equal to or more than 0.75% by mass, as the quality of the ingredient-containing liquid seasoning, when the acid taste and acid smell derived from the acetic acid were undesired flavors, the undesired flavors tended to be found as the uncomfortable feeling of flavor, and it was considered that there would be no problem with the flavor when the acid taste and acid smell were desired quality.

Specifically, it was found that the lower limit of the content of the acetic acid may be equal to or more than 0.05% by mass, preferably equal to or more than 0.075% by mass, and more preferably equal to or more than 0.1% by mass. On the other hand, it was found that the upper limit of the content of the acetic acid is not particularly limited in a case where the acid taste and acid smell are desired in the liquid seasoning, but in a case where the acid taste and acid smell are not desired, the upper limit may be usually equal to or less than 1.0% by mass, preferably equal to or less than 0.75% by mass, and more preferably equal to or less than 0.5% by mass from the viewpoint of the influence on the flavor of the liquid seasoning.

(Third Example) The third example relates to the investigation of a range of the water-soluble polysaccharide content in the ingredient-containing liquid seasoning. In this example, by using a *konnyakuimo* powder (glucomannan content: 47.5% by mass) as a representative of the water-soluble polysaccharide-containing food material, the ingredient-containing liquid seasonings having different contents as shown in Table 6 were prepared similarly as in the first example, and the evaluation was performed similarly as in the first experimental example and the second example. Further, the overall evaluation was performed based on the evaluation criteria described in Evaluation Item 7 "Overall evaluation of properties and flavor" of the second example.

The results are shown in Table 6.

**Table 6**

| Raw materials | | Comparative Example 3 | Test Example 24 | Test Example 25 | Test Example 26 | Test Example | Test 27 Example 28 | Test Example 29 | Comparative Example 4 |
|---|---|---|---|---|---|---|---|---|---|
| | | Blending amount (% by mass) | | | | | | | |
| Ingredients | Dried onion | 5 | | | | | | | |
| | Dried lentil | 5 | | | | | | | |
| Liquid seasoning | Sugar | 10 | | | | | | | |
| | Brewed vinegar (acetic acid contents of 15% by mass) | 1.5 | | | | | | | |
| | Tomato paste | 15 | | | | | | | |
| | Konnyakuimo powder | 0.010 | 0.025 | 0.050 | 0.10 | 0.25 | 0.50 | 0.75 | 1.0 |
| | Water | Residue | | | | | | | |
| Evaluation | Uniform filling (after filling into container) | 2 | 3 | 5 | 5 | 5 | 5 | 5 | 4 |
| | Viscosity after heat treatment | 5 | 5 | 5 | 5 | 5 | 5 | 3 | 2 |
| | Uncomfortable feeling of flavor | 5 | 5 | 5 | 5 | 5 | 5 | 5 | 4 |
| | Overall evaluation (property and flavor) | 2 | 4 | 5 | 5 | 5 | 5 | 4 | 2 |

As a result, it was found that in a case where the content of the water-soluble polysaccharide-containing food material is 0.01% by mass, the uniform filling property into the container is inferior probably since the viscosity of the liquid seasoning is too weak, and a problem arises from the viewpoint of the production. On the other hand, in a case where the content is 1.0% by mass, the scores of the uniform dispersibility and flavor are somewhat low probably since the viscosity is too high, and the viscosity derived from the water-soluble polysaccharide is apparently felt.

Specifically, it was found that the lower limit of the content of the water-soluble polysaccharide-containing food material may be equal to or more than 0.02% by mass, preferably equal to or more than 0.025% by mass, and more preferably equal to or more than 0.05% by mass. On the other hand, it was found that the upper limit may be equal to or less than 0.9% by mass, preferably equal to or less than 0.75% by mass, and more preferably equal to or less than 0.5% by mass. Further, it was found that the lower limit of the content of the water-soluble polysaccharide may be equal to or more than 0.01% by mass, preferably equal to or more than 0.0125% by mass, and more preferably equal to or more than 0.025% by mass. On the other hand, it was found that the upper limit may be equal to or less than 0.45% by mass or, preferably equal to or less than 0.375% by mass, and more preferably equal to or less than 0.25% by mass.

(Fourth Example) The fourth example relates to the investigation of kind of the water-soluble polysaccharide-containing food materials to be mixed in the ingredient-containing liquid seasoning. The *konnyakuimo* powder was used as the presentative of the water-soluble polysaccharide-containing food material in the first to third examples. However, the effect of the present disclosure was also verified by other water-soluble polysaccharide-containing food materials.

The ingredient-containing liquid seasonings were prepared similarly as in the first example by using the water-soluble polysaccharide-containing food materials shown in Table 7 and the water-soluble polysaccharide as the thickener, and the evaluation was performed similarly as in the first experimental example and the second example. Further, the overall evaluation was performed based on the evaluation criteria described in Evaluation Item 7 "Overall evaluation of properties and flavor" of the second example. As the kelp extract, a hot water extract powder of the kelp was used. In addition, as the *nagaimo* powder, a powder of *Yamato-imo* which is one kind of *nagaimo* or Chinese yams was used.

The results are shown in Table 7.

**Table 7**

| Raw materials | | Test Example 30 | Example 5 | Comparative Example 6 | Comparative Example 7 | Test Example 31 | Test Example 32 |
|---|---|---|---|---|---|---|---|
| | | Blending amount (% by mass) | | | | | |
| Ingredients | Dried onion | 5 | | | | | |
| | Dried lentil | 5 | | | | | |
| Liquid seasoning | Sugar | 10 | | | | | |
| | Brewed vinegar (acetic acid contents of 15% by mass) | 1.5 | | | | | |
| | Tomato paste | 15 | | | | | |
| | Water-soluble polysaccharide (containing food material) | Konnyakuimo powder 0.15 | Xanthan gum 0.15 | Locust bean gum 0.15 | Processed starch 0.15 | Kelp extract 0.15 | Powder of Chinese yams (nagaimo) 0.15 |
| | Water | Residue | | | | | |
| Evaluation | Uniform filling (after filling into container) | 5 | 4 | 4 | 4 | 3 | 3 |
| | Viscosity after heat treatment | 5 | 1 | 1 | 2 | 5 | 4 |
| | Uncomfortable feeling of flavor | 5 | 5 | 5 | 5 | 4 | 4 |
| | Overall evaluation (property and flavor) | 5 | 2 | 2 | 2 | 4 | 4 |
| Remarks | | - | Viscosity is left | Viscosity is left | Viscosity is slightly left | - | - |

As a result, it was found that an effect of the present disclosure is exerted alson in the water-soluble polysaccharide-containing food material other than the*konnyakuimo* powder. Specifically, also in any of the *konnyakuimo* powder, a kelp extract (water-soluble polysaccharide content: 85% by mass), and the *nagaimo* powder (water-soluble polysaccharide content: 35% by mass), the ingredient-containing liquid seasoning was able to be prepared, and the viscosity derived from the water-soluble polysaccharide, and the uncomfortable feeling of flavor derived from the acetic acid were almost not felt. Among them, it was found that from the viewpoint of the exertion of an effect of the present disclosure, and from the viewpoint of not affecting the flavor of the liquid seasoning, the *konnyakuimo* powder is particularly preferable. On the other hand, in the xanthan gum, locust bean gum, and processed starch that are thickeners as the food additive, the viscosity derived from the water-soluble polysaccharide remained even after the heat treatment, and an effect of the present disclosure was not exerted.

(Fifth Example) The fifth example relates to the investigation of the heat treatment temperature of the ingredient-containing liquid seasoning. In the first to fourth examples, the temperature was set to 70°C as the representative of the heat treatment temperature. However, in this example, the heat treatment was performed at various temperatures shown in Table 8, the ingredient-containing liquid seasonings were prepared similarly as in the first example, and the evaluation was performed similarly as in the first experimental example and the second example. One item was added as the evaluation item. Further, in the heat treatment condition of equal to or more than 110°C, retort heat treatment was performed at each temperature by using a retort pouch as the container. In addition, the overall evaluation was performed based on the evaluation criteria described in Evaluation Item 9 "Overall evaluation of properties and flavor of seasoning, and properties of ingredients".

(Evaluation Item 8) Properties of ingredients before and after heat treatment
5: Excellent since the degree of softening of the ingredients is within the desired quality range.
4: Somewhat excellent since the degree of softening of the ingredients is almost within the desired quality range.
3: Acceptable since the degree of softening of the ingredients slightly progresses.
2: Somewhat inferior since the degree of softening of the ingredients somewhat progresses.
1: Inferior since the degree of softening of the ingredients excessively progresses.

(Evaluation Item 9) Overall evaluation of properties and flavor of seasoning, and properties of ingredients
5: Properties and flavor as the ingredient-containing liquid seasoning are excellent.
4: Properties and flavor as the ingredient-containing liquid seasoning are somewhat excellent.
3: Properties and flavor as the ingredient-containing liquid seasoning are slightly inferior and acceptable.
2: Properties and flavor as the ingredient-containing liquid seasoning are somewhat inferior.
1: Properties and flavor as the ingredient-containing liquid seasoning are inferior.

The results are shown in Table 8.

**Table 8**

| Raw materials | | Test Example 33 | Test Example 34 | Test Example 35 | Test Example 36 | Test Example 37 | Test Example 38 | Test Example 39 | Comparative Example 8 |
|---|---|---|---|---|---|---|---|---|---|
| | | Blending amount (% by mass) | | | | | | | |
| Ingredients | Dried onion | 5 | | | | | | | |
| | Dried lentil | 5 | | | | | | | |
| Liquid seasoning | Sugar | 10 | | | | | | | |
| | Brewed vinegar (acetic acid contents of 15% by mass) | 1.5 | | | | | | | |
| | Tomato paste | 15 | | | | | | | |
| | Konnyakuimo powder | 0.15 | | | | | | | |
| | Water | Residue | | | | | | | |
| Heat treatment condition (° C. 30 minutes) | | 70 | 80 | 90 | 100 | 110 | 120 | 130 | 140 |
| Evaluation | Uniform filling (after filling into container) | 5 | 5 | 5 | 5 | 5 | 5 | 5 | 5 |
| | Viscosity after heat treatment | 5 | 5 | 5 | 5 | 5 | 5 | 5 | 5 |
| | Uncomfortable feeling of flavor | 5 | 5 | 5 | 5 | 4 | 4 | 4 | 3 |
| | Property of ingredients | 5 | 5 | 5 | 4 | 3 | 3 | 3 | 2 |
| | Overall evaluation (property and flavor) | 5 | 5 | 5 | 5 | 4 | 4 | 3 | 2 |
| Remarks | | - | - | - | - | Retort odor is slightly felt, and ingredients are slightly softened | Retort odor is slightly felt, and ingredients are somewhat softened | Retort odor is slightly felt, and ingredients are softened | Retort odor is slightly felt, and ingredients are collapsed |

As a result, it was found that the ingredient-containing liquid seasoning in the sealed container can be prepared without having any problems, in heat treatment at a range between 70°C and 130°C. However, in the retort heat treatment at the heat treatment temperature equal to or more than 110°C, impartment of retort odor is confirmed as the influence on the flavor other than the acid taste and acid smell, and further, a tendency that the softening of the ingredients progresses was observed. In addition, in the case of the heat treatment at equal to or more than 110°C in a pressurized state, even if the treatment time was shortened, although the degree of softening of the ingredients decreased, the tendency to soften the ingredients was still observed.

Specifically, it was found that as the heat treatment temperature of the ingredient-containing liquid seasoning in the sealed container of the present disclosure, the upper limit may be equal to or less than 130°C, and more preferably less than 100°C. On the other hand, it was found that the lower limit may be usually equal to or more than 70°C.

(Sixth Example) The sixth example relates to the investigation of the heat treatment time of the ingredient-containing liquid seasoning.

In this example, the heat treatment was performed for various times at the temperatures shown in Table 9, the ingredient-containing liquid seasonings were prepared similarly as in the fifth example, and the evaluation was performed similarly as in the first experimental example and the second and fifth examples. In addition, the overall evaluation was performed based on the evaluation criteria described in Evaluation Item 9 "Overall evaluation of properties and flavor of seasoning, and properties of ingredients" of the fifth example.

The results are shown in Table 9.

**Table 9**

| Raw materials | | Test Example 40 | Test Example 41 | Test Example 42 | Test Example 43 | Test Example 44 | Test Example 45 | Test Example 46 |
|---|---|---|---|---|---|---|---|---|
| | | Blending amount (% by mass)) | | | | | | |
| Ingredients | Dried onion | 5 | | | | | | |
| | Dried lentil | 5 | | | | | | |
| Liquid seasoning | Sugar | 10 | | | | | | |
| | Brewed vinegar (acetic acid contents of 15% by mass) | 1.5 | | | | | | |
| | Tomato paste | 15 | | | | | | |
| | Konnyakuimo powder | 0.15 | | | | | | |
| | Water | Residue | | | | | | |
| Heat treatment condition (95° C. minutes) | | 5 | 10 | 20 | 30 | 40 | 50 | 60 |
| Evaluation | Uniform filling (after filling into container) | 5 | 5 | 5 | 5 | 5 | 5 | 5 |
| | Viscosity after heat treatment | 4 | 4 | 5 | 5 | 5 | 5 | 5 |
| | Uncomfortable feeling of flavor | 4 | 5 | 5 | 5 | 5 | 5 | 4 |
| | Property of ingredients | 5 | 5 | 5 | 5 | 5 | 4 | 4 |
| | Overall evaluation (property and flavor) | 4 | 5 | 5 | 5 | 5 | 5 | 4 |
| Remarks | | Viscosity is slightly felt | - | - | - | - | - | - |

As a result, it was found that the ingredient-containing liquid seasoning in the sealed container can be prepared without having any problems, in the heat treatment at 95°C for a time range between equal to or more than 5 minutes and equal to or less than 60 minutes.

(Seventh Example) The seventh example relates to the verification of preparation of various kinds of the ingredient-containing liquid seasonings. In this example, based on the findings obtained in the first experimental example and the first to sixth examples, the seasonings with different flavors and different liquid properties were prepared by using the various kinds of the ingredients and various kinds of the raw materials shown in Tables 10 and 11 (Tables 11-1 and 11-2), and it was verified whether or not the effect of the present disclosure can be widely applied. The ingredient-containing liquid seasonings were prepared similarly as in the first example except that the heat treatment condition was set to 95°C and 30 minutes. In addition, the evaluation was performed similarly as in the first experimental example and the second and fifth examples. Further, the liquid properties of the liquid seasoning before and after the heat treatment were confirmed by visual observation. In various kinds of the seasonings, the seasoning of the comparative example containing no acetic acid was prepared, and the evaluation was performed by using the prepared comparative example as a control of the experiment. In addition, the overall evaluation was performed based on the evaluation criteria described in Evaluation Item 9 "Overall evaluation of properties and flavor of seasoning, and properties of ingredients" of the fifth example.

The measurement value of the viscosity after the heat treatment was obtained by a B-type viscometer ("B-II" manufactured by Toki Sangyo Co., Ltd). Specifically, an adequate amount of the liquid seasoning after the heat treatment was filled into the container for measurement of the B-type viscometer, the temperature was adjusted to 20°C, and then the container was arranged to the B-type viscometer, and the viscosity was measured at an adequate revolution by using a rotor suitable for the measurement of viscosity. Specifically, the viscosity was measured at a revolution of 30 rpm by using No.3 of the rotor.

**Table 10**

| Ingredients | Shape | Length of longest line of i ngred i ents (mm) |
|---|---|---|
| Dried onion | Long piece | 50 |
| Dried lentil | Granular | 4 |
| Frozen Carrot | Square | 5 |
| Roasted sesame | Granular | 1 |
| Chilled grated radish (daikon radish) | Granular | 1.5 |
| Flaked soy protein | Square | 10 |

The results are shown in Table 11 (Tables 11-1 and 11-2).

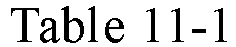

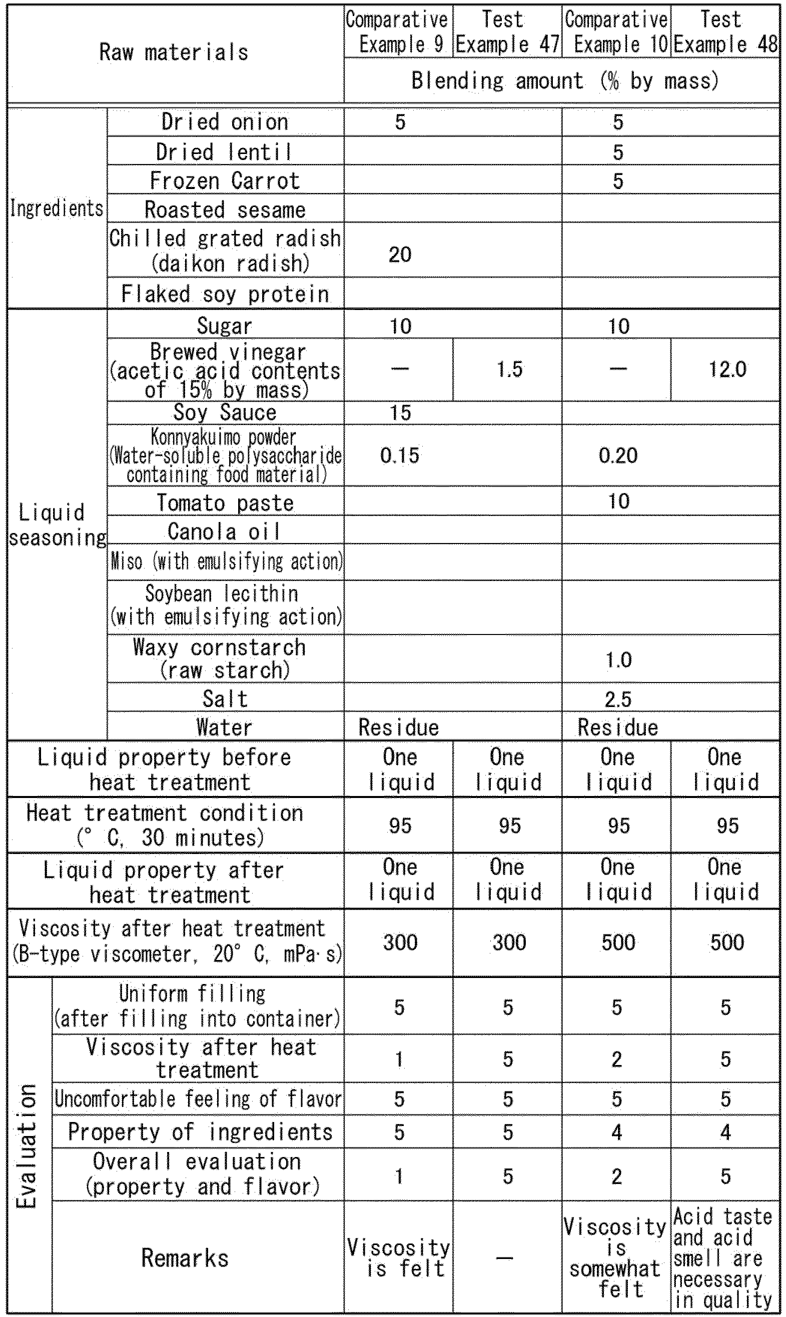

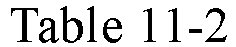

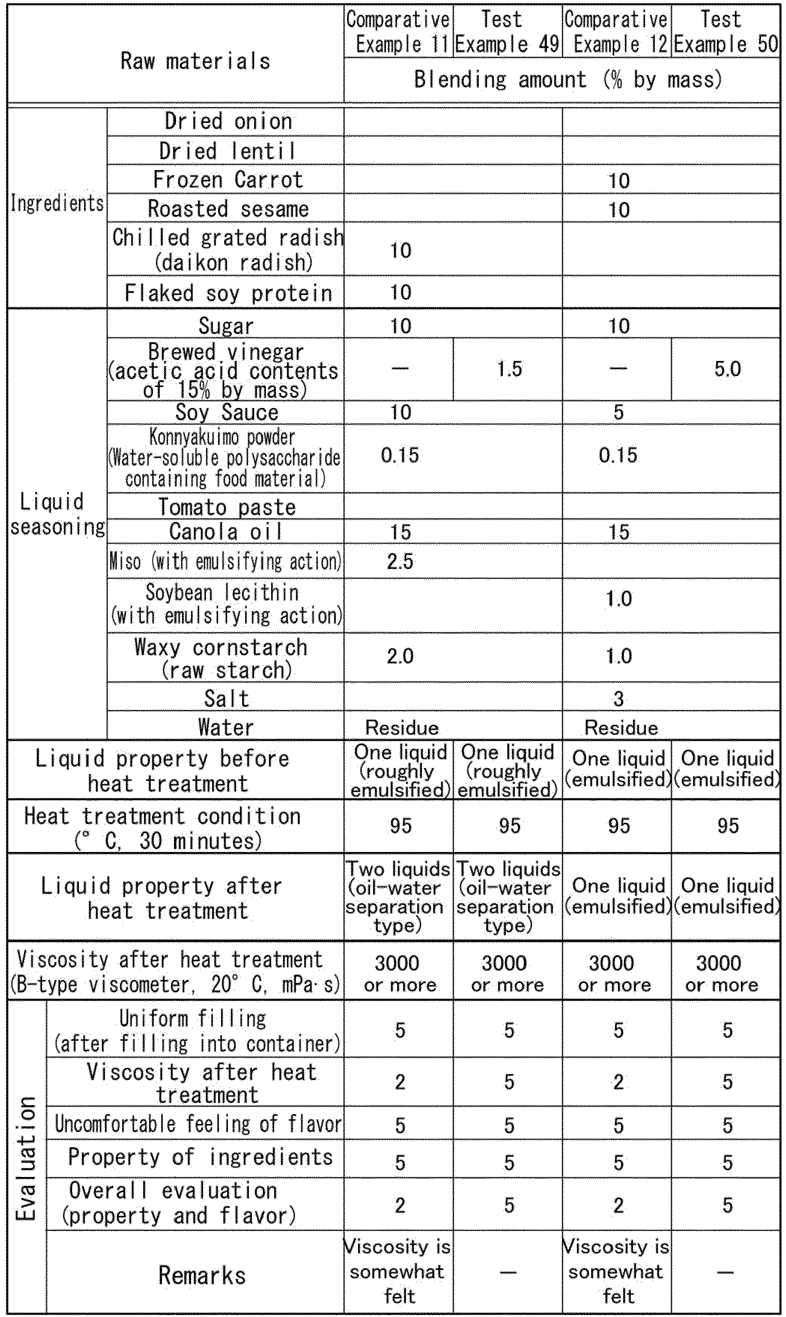

As a result, in a case where the acetic acid was not used (each comparative example) together with roughly four types ((i) one-liquid type in which raw starch is not used, (ii) one-liquid type in which viscosity is imparted by using raw starch, (iii) one-liquid type before heating and two-liquid type after heating, in which viscosity is imparted by using raw starch and edible fat and oil is used, (iv) two-liquid type both before and after heating, in which viscosity is imparted by using raw starch and edible fat and oil is used), the viscosity derived from the water-soluble polysaccharide was noticeable in the quality, and although the scores were high in other evaluation criteria, this viscosity became a bottleneck, and the overall evaluation was significantly decreased. On the other hand, it was confirmed that in a case where the acetic acid and the water-soluble polysaccharide-containing food material were used in combination (each test example), the viscosity derived from the water-soluble polysaccharide was completely eliminated, and the quality is comprehensively high.

### INDUSTRIAL APPLICABILITY

The heat-treated ingredient-containing liquid seasoning in the sealed container, the method for producing the heat-treated ingredient-containing liquid seasoning, and the method for improving properties of the heat-treated ingredient-containing liquid seasoning of the present disclosure are expected to be applied in a food field in terms of the above production with a simple operation and general raw materials by using an ordinary device without requiring any special device, any complicated treatment condition, and any special raw material and without impairing the flavor and properties of the ingredients and liquid seasoning, and of the effect by which the property of the viscosity derived from the water-soluble polysaccharide and damaging the palatability and preference can be improved.

### CROSS-REFERENCE TO RELATED APPLICATION

The present application is based on and claims priority to Japanese Patent Application No. 2019-014312, filed on January 30, 2019, the disclosure of which is hereby incorporated by reference in its entirety.

## Claims

1. An ingredient-containing liquid seasoning of ingredients and a liquid seasoning in a solid-liquid simultaneous filling type sealed container, comprising:
acetic acid; and
a water-soluble polysaccharide-containing food material,
wherein the ingredient-containing liquid seasoning is heat treated.

2. The ingredient-containing liquid seasoning according to claim 1,
wherein a length of a longest line of the ingredients before heat treatment ranges between equal to or more than 1.0 mm and equal to or less than 80 mm, and
wherein a mass increase rate of the ingredients between before the heat treatment and after the heat treatment ranges between equal to or more than 0.5 times and equal to or less than 10 times.

3. The ingredient-containing liquid seasoning according to claim 1 or 2, wherein a content of the acetic acid is equal to or more than 0.05% by mass with respect to a total amount of the ingredient-containing liquid seasoning.

4. The ingredient-containing liquid seasoning according to any one of claims 1 to 3, wherein a mixing amount of a water-soluble polysaccharide derived from the water-soluble polysaccharide-containing food material before heat treatment ranges between equal to or more than 0.01% by mass and equal to or less than 0.45% by mass with respect to a total amount of the ingredient-containing liquid seasoning.

5. The ingredient-containing liquid seasoning according to any one of claims 1 to 4, wherein the water-soluble polysaccharide-containing food material is one or more selected from *konnyakuimo* powder, kelp extract, and *nagaimo* powder.

6. The ingredient-containing liquid seasoning according to any one of claims 1 to 5,
wherein a heat treatment temperature ranges between equal to or more than 70°C and equal to or less than 100°C, and
wherein a heat treatment time ranges between equal to or more than 5 minutes and equal to or less than 60 minutes.

7. The ingredient-containing liquid seasoning according to any one of claims 1 to 6, comprising raw starch as a raw material,
wherein a viscosity (at 20°C by a B-type viscometer) in a final product is equal to or more than 500 mPa·s.

8. The ingredient-containing liquid seasoning according to any one of claims 1 to 7, comprising a food material having an emulsifying action and edible fat and oil as raw materials,
wherein a liquid property in a final product is an oil-water separation type.

9. A method for producing an ingredient-containing liquid seasoning of ingredients and a liquid seasoning in a solid-liquid simultaneous filling type sealed container, comprising:
mixing ingredients, acetic acid, and a water-soluble polysaccharide-containing food material;
simultaneously filling a mixture obtained by the mixing into the container;
performing heat treatment on the container after or before sealing the container; and
cooling an ingredient-containing liquid seasoning in the sealed container obtained by performing heat treatment to an approximately ambient temperature.

10. A method for improving properties of an ingredient-containing liquid seasoning of ingredients and a liquid seasoning in a solid-liquid simultaneous filling type sealed container, comprising:
mixing ingredients, acetic acid, and a water-soluble polysaccharide-containing food material;
simultaneously filling an obtained mixture into the container;
performing heat treatment on the container after or before sealing the container; and
cooling an obtained ingredient-containing liquid seasoning in the sealed container to an approximately ambient temperature.

11. The method according to claim 10, wherein a uniform filling property of the ingredients and the liquid seasoning for each container improves, and viscosity derived from the water-soluble polysaccharide in the liquid seasoning is specifically eliminated.
